# EUROPEAN PATENT SPECIFICATION

(11) **EP 2 555 876 B1**
(45) Date of publication and mention of the grant of the patent: **07.01.2015**
(21) Application number: 11719911.7
(22) Date of filing: 05.04.2011
(51) Int. Cl.: B04B 5/00, B04B 5/08, B04B 5/12, F01M 13/04

(54) **CENTRIFUGAL SEPARATOR**
ZENTRIFUGALABSCHEIDER
SÉPARATEUR CENTRIFUGE

(30) Priority: 09.04.2010 SE 1050350
(43) Date of publication of application: 13.02.2013
(73) Proprietor: Alfa Laval Corporate AB, 221 00 Lund (SE)
(72) Inventor: SZEPESSY, Stefan, S-141 39 Huddinge (SE); TÖRNBLOM, Olle, S-147 10 Tumba (SE)
(74) Representative: Alfa Laval Attorneys
(86) International application number: PCT/SE2011/050398
(87) International publication number: WO 2011/126436

(56) References cited:
- EP-A1- 1 645 320
- EP-A1- 1 772 193
- WO-A1-2007/073320
- DE-A1- 10 163 924
- SE-C2- 519 180
- US-A1- 2004 159 085
- US-B1- 6 925 993

## Description

### BACKGROUND TO THE INVENTION AND PRIOR ART

The present invention relates to a device for cleaning of polluted gas from a combustion engine, e.g. crankcase gas vented from a crankcase of a combustion engine. The device comprises a centrifugal separator for removal of pollutants suspended in the polluted gas in the form of solid or liquid particles. Crankcase gas usually contains pollutants in the form of soot particles and/or oil mist. The centrifugal separator comprises a centrifuge rotor which by means of a drive device is rotatable about a rotational axis and adapted to causing rotation of the polluted gas. The centrifuge rotor comprises a stack of truncated conical separating discs disposed at mutual spacing so that they delimit between them intermediate spaces for the gas to flow through. The centrifuge rotor further comprises an outlet chamber disposed centrally within the stack of separating discs and communicating with said intermediate spaces and is thus configured for counterflow separation in such a way that the polluted gas is caused to rotate and is led into the intermediate spaces radially from outside the stack of separating discs and in towards the centre and the central outlet chamber. The centrifugal separator comprises a gas outlet communicating with the outlet chamber and adapted to discharging the cleaned gas from the centrifuge rotor.

EP 1273335 B1 and DE 101 63 924 A1 describe such a known device for cleaning of crankcase gas. The centrifugal separator of the known device has a stationary housing which delimits within it a chamber in which the centrifuge rotor is arranged to rotate. The centrifugal separator is arranged to be fastened to the side of the combustion engine, and an external feed line is provided to lead crankcase gas from the engine to an inlet provided on the housing and communicating with the centrifuge rotor. During operation, the pollutants are separated from the crankcase gas by the rotating centrifuge rotor, and the housing has accordingly an outlet for the separated pollutants (oil and soot) and a gas outlet for the cleaned gas.

SE 529 409 C2 refers to a similar device for cleaning of crankcase gas. This centrifugal separator has a stationary housing which encloses the centrifuge rotor and which has an interface surface configured for direct mounting of the housing on a valve cover of the combustion engine. The interface surface is provided with a gas inlet which, via an aperture in the valve cover, communicates directly with the crankcase gas in a space defined by the valve cover. Such a configuration results in no need to provide an external crankcase gas feed line. The housing comprises also a gas outlet for the cleaned gas and a special gathering trough for the separated pollutants.

The prior art device has proved to be very effective for cleaning of polluted gas. Within the vehicle industry there are constantly increasing environmental requirements with a view to reducing emissions to the environment. The devices indicated above are traditionally used for cleaning of crankcase gas from large diesel engines. There is however a need to clean also crankcase gas from smaller combustion engines, e.g. diesel engines of the order of 5 to 9 litres or still smaller engines for passenger cars. At the same time, the automotive industry sets high requirements in terms of compact and cost-effective solutions exhibiting high performance.

### SUMMARY OF THE INVENTION

An object of the present invention is to wholly or at least partly meet the above need.

According to the present invention, this is achieved by the device specified in the pre-characterising portion of claim 1 which is characterised in that the stack of separating discs on the centrifuge rotor is disposed for rotation in a space which is formed within the combustion engine and which is arranged to receive the polluted gas, the intermediate spaces between the separating discs communicating directly with the space, and the gas outlet is arranged to conduct the cleaned gas out from the space through a wall which delimits the space.

The device according to the invention thus utilises a space already present within the combustion engine. For cleaning of crankcase gas it is for example possible for such a space to take the form of the crankcase or a formed space situated within the engine block and communicating with the crankcase. Other possible spaces are those delimited by various kinds of covers belonging to the engine, e.g. the space within a valve cover, a timing chain case or a flywheel housing. For crankcase gas cleaning purposes, such spaces may be arranged to communicate with the crankcase through channels in the engine block. The space formed within the engine thus constitutes a delimited space for the centrifuge rotor. This means that the centrifugal separator needs neither a separate housing of its own to enclose the centrifuge rotor nor a separate feed line of its own to supply polluted gas to the centrifuge rotor. The device according to the invention occupies hardly any space outside the engine, since the whole or substantially the whole of the centrifugal separator is accommodated in the existing engine space. Nor does the centrifugal separator need to be provided with any outlet device for the pollutants separated from the gas. Instead, the centrifuge rotor is arranged, as a result of the counterflow separation, to propel the separated pollutants radially outwards from the stack of separating discs and directly back to the space which already contains polluted gas.

The centrifuge rotor may with advantage be situated in the space at such spacing from the delimiting wall that the polluted gas can flow relatively freely along the whole axial extent of the stack. This creates good conditions for the polluted gas to be distributed equally (homogeneously) to all the intermediate spaces between the separating discs. Owing to the limited space around a combustion engine, the prior art centrifugal separator is so configured that said stationary housing surrounds it relatively closely, i.e. the centrifugal separator is configured with a relatively small annular space between the centrifuge rotor and its surrounding housing. Such a small annular space may result in flow resistance causing uneven distribution of the polluted gas to the intermediate spaces in the stack of separating discs. The invention can therefore make improved separation performance possible in that the free flow along the whole stack of separating discs results in a more even distribution of the polluted gas to all the intermediate spaces between the separating discs.

Consequently, the invention proposes a device which results in effective cleaning of polluted gas from a combustion engine and which is both simple and compact.

According to an embodiment of the invention, the drive device is so arranged that the speed of the centrifuge rotor is variable relative to the speed of the combustion engine. By speed control, the centrifuge rotor speed and hence the cleaning effect can be adjusted as necessary. The centrifuge rotor may for example be drivingly connected to a shaft of the engine, wherein the drive device comprises means for a variable transmission ratio between said shaft and the centrifuge rotor so that the speed of the centrifuge rotor can be varied relative to the speed of the shaft and the engine.

According to another embodiment of the invention, the drive device is a motor. In this case the centrifuge rotor is driven by a motor of its own which is independent of the speed of the combustion engine. Such a motor also allows the possibility of speed control of the centrifuge rotor, which may for example be achieved by an electric motor operatively connected to a control unit for speed control of the electric motor and hence of the centrifuge rotor. The speed of a pneumatic or hydraulic motor may also be controlled by control of the flow of pressurised gas or liquid to the pneumatic or hydraulic motor.

According to another embodiment of the invention, the drive device is situated outside the space. The drive device is thus isolated from the space which contains polluted gas, which means for example that an electric motor can be protected from a relatively dirty and aggressive environment which contains oil mist, soot and other pollutants.

According to a further embodiment of the invention, a bearing unit is provided in the delimiting wall of the space, to rotatably support the centrifuge rotor in the wall. The wall is thus used as support for the centrifuge rotor. A further bearing unit may be provided in the space, in which case the bearing units are adapted to rotatably supporting the centrifuge rotor on their respective sides of the stack of separating discs. This results in relatively rigid journalling of the centrifuge rotor, whereby harmful vibrations and oscillations can be avoided during its rotation.

According to another embodiment of the invention, the centrifuge rotor is drivingly connected to the drive device via a rotor shaft which extends through a shaft lead-through in the delimiting wall of the space, the shaft lead-through being configured with said bearing unit in the wall. This means that the shaft lead-through can be used to rotatably support the centrifuge rotor in the wall.

According to a further embodiment of the invention, the centrifuge rotor is rotatably supported only in said bearing unit in the wall. This results in a simple support device for the whole centrifugal separator with only one bearing unit.

According to a further embodiment of the invention, the gas outlet communicates with the outlet chamber via an axial end wall which is situated on the stack of separating discs distally from said bearing unit in the wall. The gas outlet is thus disposed in the space on one axial side of the stack of separating discs, and the bearing unit is situated in the wall on the other axial side of the stack of separating discs.

According to a further embodiment of the invention, the gas outlet communicates with the outlet chamber via an axial end wall which is situated on the stack of separating discs proximally about said bearing unit in the wall. Both the gas outlet and the bearing unit are thus situated on the same axial side of the stack of separating discs.

According to a further embodiment of the invention, the gas outlet has the form of a tubular element which surrounds said bearing unit in the wall and which is connected to the delimiting wall of the space, which gas outlet forms an outlet duct in which a bearing support of the bearing unit is so arranged that cleaned gas can be conducted past the bearing support in the outlet duct. The result is a gas outlet combined with a bearing unit for rotatably supporting the centrifuge rotor in the wall.

According to a further embodiment of the invention, the motor is an electric motor. It is relatively easy to arrange a speed control for an electric motor. The electric motor is preferably situated outside the space so that it is isolated from the space containing the polluted gas and is therefore protected from the relatively dirty environment.

According to a further embodiment of the invention, the motor is a hydraulic or pneumatic motor arranged to rotate the centrifuge rotor by means of a fluid which is pressurised by the combustion engine during operation. Such a fluid may for example be compressed air or pressurised lubricant (oil) from an already present compressed air or lubricant system of a combustion engine for a vehicle, e.g. a truck.

According to a further embodiment of the invention, the motor comprises a turbine situated in the space and connected to the centrifuge rotor, which motor comprises a duct for supply of said pressurised fluid to an orifice provided in the space and directed towards the turbine in order to cause the turbine wheel and hence the centrifuge rotor to rotate. This means that the space can also be used for driving the centrifuge rotor. Pressurised lubricant (oil) may preferably be used as said pressurised fluid, since the space for the polluted gas is usually also configured to contain lubricant and/or to return said lubricant to, for example, the crankcase.

According to a further embodiment of the invention, the centrifugal separator comprises a fan situated downstream of the stack of separating discs and adapted to compensating for the pressure drop associated with the gas flow through the centrifuge rotor. In this case the gas outlet may be provided with a fan housing surrounding a fan impeller mounted on a rotor shaft which belongs to the centrifuge rotor and extends into the fan housing. In a counterflow separator, the centrifuge rotor exerts a pumping action on the gas flow in a direction opposite to the desired direction of flow, resulting in flow resistance through such a centrifuge rotor during operation. The rotating fan thus draws crankcase gas through the centrifuge rotor during operation. Excessive gas pressure in the space is thus avoided.

According to a further embodiment of the invention, the space formed within the combustion engine is delimited by a cover on the engine. Said wall delimiting the space may thus take the form of a valve cover, timing chain case, flywheel housing or the like. Such a cover arranged to delimit a space for receiving crankcase gas is prior art and not further described here.

According to another embodiment of the invention, the polluted gas is crankcase gas vented from a crankcase of the combustion engine. This means that the crankcase gas from the engine can be cleaned by the device. To this end, the space formed within the engine may be its crankcase or a space formed within the engine block and arranged to communicate with the crankcase.

### BRIEF DESCRIPTION OF THE DRAWINGS

The invention is explained in more detail below by a detailed description of embodiments of the invention described by way of examples with reference to the attached drawings.
- Fig. 1: shows a device according to a first embodiment of the invention.
- Fig. 2: shows a device according to a second embodiment of the invention.
- Fig. 3: shows a device according to a third embodiment of the invention.

### DETAILED DESCRIPTION OF VARIOUS EMBODIMENTS OF THE INVENTION

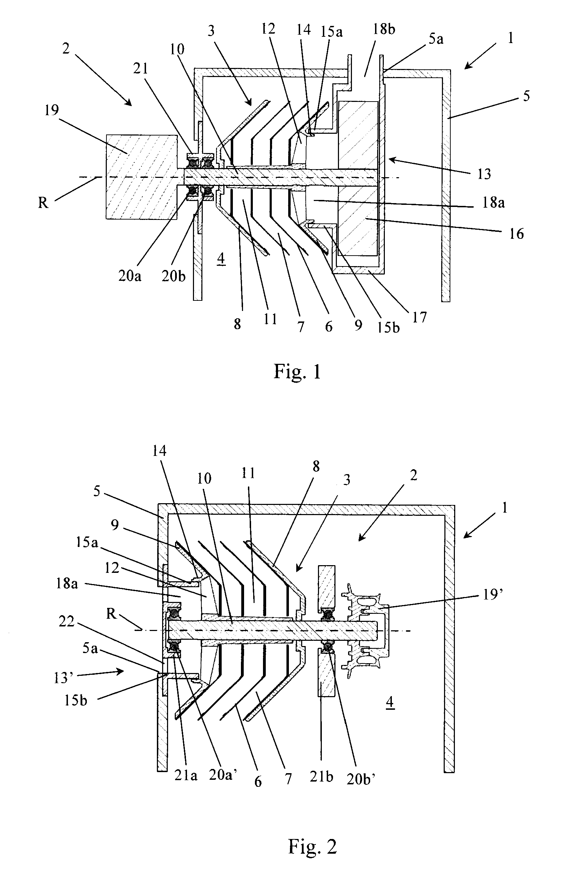

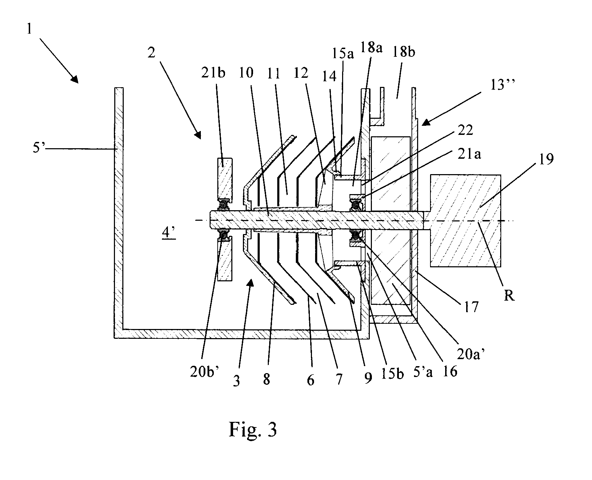

Figs. 1 - 3 show various embodiments of a device for cleaning of polluted gas from a combustion engine. In the embodiments shown, the polluted gas is crankcase gas vented from a crankcase of the engine. The device 1 comprises a centrifugal separator 2 for separation of particulate pollutants from the crankcase gas. The centrifugal separator 2 comprises a centrifuge rotor 3 which is rotatable about a rotational axis R and which is disposed in a space 4 and 4' formed within the engine, i.e. a space which belongs to the engine. In a first and second embodiment according to Fig. 1 and Fig. 2 respectively, the space 4 is delimited by a valve cover 5 of the engine, which space 4 within the valve cover 5 is arranged to receive crankcase gas from the crankcase. The engine thus comprises an engine block provided with channels which are arranged to conduct the crankcase gas from the crankcase to the space 4 delimited by the valve cover 5. In a third embodiment according to Fig. 3 the centrifuge rotor 3 is rotatably arranged directly within the crankcase 5', i.e. in the space 4' delimited by the crankcase 5'.

In the space 4, 4' the centrifuge rotor 3 is provided with a stack of separating discs 6 disposed at mutual spacing so that they delimit between them intermediate spaces 7 for crankcase gas to flow through. Such intermediate spaces 7 may be formed by providing a number of spacing members (not shown) on the surfaces of the separating discs. For the sake of clarity, the drawing shows only a small number of separating discs 6 with large axial intermediate spaces 7. In practice, significantly more separating discs 6 are stacked, with the result that relatively thin intermediate spaces 7 are formed between them. The stack of separating discs is disposed in the space 4 and 4' in such a way that the intermediate spaces 7 between the separating discs 6 communicate directly with the space 4 and 4'. The separating discs 6 are of truncated conical shape and stacked between a first end wall 8 and a second end wall 9 which are of truncated conical shape corresponding to the separating discs 6. A rotor shaft 10 extends coaxially with the rotational axis R through the stack of separating discs 6, and the separating discs 6 and the end walls 8, 9 are disposed concentrically and connected to the rotor shaft 10. Each end wall 8, 9 and each separating disc 6 therefore have a central planar portion with a hole for the rotor shaft 10.

Each separating disc 6 further has running through it, in the planar portion, gas flow apertures (not shown) distributed around the rotor shaft 10. The gas flow apertures in the separating discs 6 and the intermediate spaces 7 between the central planar portions of the separating discs together form a central outlet chamber 11 within the stack of separating discs 6. Consequently, the centrifuge rotor 3 is arranged to clean crankcase gas by so-called counterflow separation, wherein polluted crankcase gas is led into intermediate spaces 7 between the separating discs 6, radially from outside the rotor 3, and thence towards the central outlet chamber 11. The central portion of the second end wall 9 has running through it a plurality of apertures 12 distributed around the rotor shaft 10 so that the central outlet chamber 11 can communicate with a stationary gas outlet 13, 13' and 13" in order to discharge cleaned crankcase gas from the centrifuge rotor 3. The second end wall 9 further has an annular flange 14 which extends axially towards the gas outlet 13, 13' and 13" and is arranged to cooperate with a similar annular flange 15a on a tubular element 15b on the gas outlet 13, 13' and 13". The cleaned crankcase gas is thus guided from the central outlet chamber 11 to the stationary gas outlet 13, 13' and 13".

In the first embodiment shown in Fig. 1, the stationary gas outlet 13 is disposed in the space 4 within the valve cover 5. A fan impeller 16 is provided at a first end of the rotor shaft 10 which extends into the gas outlet 13, and a portion of the gas outlet 13 which surrounds the fan impeller 16 is configured as a fan housing 17. The gas outlet 13 further comprises an outlet duct 18b connected to the fan housing 17 and arranged to conduct crankcase gas out from the space 4 through a duct lead-through or aperture 5a in the valve cover 5. The fan impeller 16 in the gas outlet 13 is configured to pump crankcase gas from the outlet chamber 11 and out through the outlet duct 18b of the fan housing 17. In a counterflow separator, the stack of separating discs 6 exerts a pumping action on the gas flow in a direction opposite to the desired direction of flow, causing flow resistance or pressure drop through such a centrifuge rotor 3 during operation. The fan 16 is thus adapted to at least compensate for the pressure drop associated with the gas flow through the rotor 3.

Fig. 1 shows schematically an electric motor 19 which is drivingly connected to the centrifuge rotor 3 and mounted on the outside of the valve cover 5. The motor 19 is connected to a second end of the rotor shaft 10 which extends through a shaft lead-through in the valve cover 5. The shaft passage comprises a bearing unit with two bearings 20a, 20b and a bearing support 21 which are disposed in the valve cover 5 to rotatably support the centrifuge rotor 3 via the rotor shaft 10. Said two bearings 20a and 20b are disposed axially side by side in the bearing support 21. As illustrated in Fig. 1, the rotor shaft 10 is only journalled by the bearing unit associated with the shaft passage in the valve cover 5. The result is a simple support device for the whole of the centrifuge rotor 3. If so desired, however, a further bearing unit (not shown) may be provided within the gas outlet 13 at the first end of the rotor shaft 10 so that the centrifuge rotor 3 is supported on both sides of the stack of separating discs 6.

In the second embodiment shown in Fig. 2, the stationary gas outlet 13' takes the form of a tubular element 15b which defines an outlet duct 18a for cleaned crankcase gas. In the valve cover 5 there is an aperture 5a to which the outlet duct 18a connects so that cleaned crankcase gas can be conducted out from the space 4 within the valve cover 5. The tubular element 15b is connected directly to the valve cover 5 in the region around its aperture 5a, extends axially inwards towards the annular flange 14 on the second end wall 9 of the centrifuge rotor 3 and has a free end in the form of a cooperating annular flange 15a. As described above, the flanges 14 and 15a are arranged to cooperate in order to guide the cleaned crankcase gas from the central outlet chamber 11 in the centrifuge rotor 3 to the stationary gas outlet 13'.

Fig. 2 shows a first end of the rotor shaft 10 extending into the tubular element 15b which surrounds a bearing unit comprising a first bearing 20a' and a bearing support 21 a which are arranged to rotatably support the rotor shaft 10 in the valve cover 5 via the tubular element 15b. In the tubular element 15b, the bearing support 21a is supported by a flange extending radially between the bearing support 21 a and the tubular element 15b and having a plurality of holes 22 running through it which are distributed round the bearing support 21 a and are arranged to conduct cleaned crankcase gas past the bearing support 21a in the outlet duct 18a. A second end of the rotor shaft 10 is disposed in the space 4 and supports a turbine wheel 19'. The rotor shaft 10 is thus drivingly connected to a hydraulic motor which further comprises a nozzle (not shown) situated in the space 4 and arranged to direct towards the turbine wheel 19' a jet of liquid (e.g. pressurised oil) for rotation of the turbine impeller 19' and the centrifuge rotor 3. Between the stack of separating discs 6 and the turbine wheel 19', the rotor shaft 10 is journalled by a second bearing 20b' in a wall element 21b disposed in the space 4 within the valve cover 5. In the second embodiment, the centrifuge rotor 3 is thus rotatably supported on the respective sides of the stack of separating discs 6 by the first bearing 20a' and the second bearing 20b'.

In the third embodiment shown in Fig. 3, the centrifuge rotor 3 is disposed for rotation within a crankcase 5'. The space 4' within the crankcase 5' is arranged to contain oil in liquid form up to a certain level. However, the rotor 3 is disposed in the portion of the space 4' which is arranged to contain crankcase gas. Consequently, the centrifugal separator 2 shown is situated at a suitable distance above said oil level so that there is no risk of the centrifuge rotor 3 coming into contact with, or being filled with, the liquid oil.

Fig. 3 shows a stationary gas outlet 13" provided with a tubular element 15b which defines an outlet duct 18a for cleaned crankcase gas. In the crankcase 5' there is an aperture 5'a to which the outlet duct 18a connects so that cleaned crankcase gas can be conducted out from the space 4' within the crankcase 5'. The tubular element 15b is connected directly to the crankcase 5' in the region round its aperture 5'a and extends radially inwards towards the annular flange 14 on the second end wall 9 of the centrifuge rotor 3, and the free end of the tubular element 15b takes the form of the cooperating annular flange 15a. As described above, the flanges 14 and 15a are arranged to cooperate in order to guide the cleaned crankcase gas from the central outlet chamber 11 in the centrifuge rotor 3 to the stationary gas outlet 13". The rotor shaft 10 extends axially through the tubular element 15b and out from the crankcase 5' through its aperture 5'a. Immediately outside the crankcase 5', the rotor shaft 10 supports a fan impeller 16, wherein the gas outlet 13" comprises a fan housing 17 which surrounds the fan impeller 16, is disposed outside the crankcase 5' and is arranged to communicate with said outlet duct 18a via the aperture 5'a in the crankcase 5'. The gas outlet 13" further comprises an outlet duct 18b connected to the fan housing 17 and arranged to conduct crankcase gas out from the fan housing 17. As previously described, the fan impeller 16 is configured to pump crankcase gas from the outlet chamber 11 in the centrifuge rotor 3 and out through the stationary gas outlet 13'. The fan impeller 16 may thus be adapted to at least compensate for said pressure drop associated with the gas flow through the centrifuge rotor 3. Alternatively, the fan impeller 16 may be totally omitted from this embodiment in cases where there is no need for the above pressure drop compensation.

Fig. 3 shows schematically an electric motor 19 drivingly connected to the centrifuge rotor 3 and mounted on the outside of the fan housing 17. The motor 19 is connected to a first end of the rotor shaft 10 which extends through a shaft lead-through in the fan housing 17. In the third embodiment, the centrifuge rotor 3 is journalled on both sides of the stack of separating discs 6. The portion of the rotor shaft 10 which extends into the tubular element 15b is journalled by a bearing unit comprising a first bearing 20a' and a bearing support 21a which are arranged to support the rotor shaft 10 for rotation in the crankcase 5' via the tubular element 15b. In the tubular element 15b, the bearing support 21 a is supported by a flange extending radially between the bearing retainer 21 and the tubular element 15b and having a plurality of holes 22 running through it which are distributed around the bearing support 21 a and are arranged to conduct cleaned crankcase gas past the bearing support 21 a in the outlet duct 18a. A second end of the rotor shaft 10 is journalled by a second bearing 20b' in a wall element 21b disposed in the space 4' within the crankcase 5'.

The device described above and shown in the drawing works in the manner explained below for cleaning of crankcase gas from therein suspended particles (pollutants) which are of higher density than the gas. In this case the pollutants are of two kinds, viz. solid particles, e.g. soot particles, and liquid particles, e.g. oil particles.

The motor 19, 19' maintains rotation of the centrifuge rotor 3 within the space 4, 4'. Polluted crankcase gas in the space 4, 4' is led from an outer periphery of the stack of separating discs 6 directly into intermediate spaces 7 between the separating discs 6. From there, the gas flows radially inwards towards the central outlet chamber 11 of the rotor. While the gas is flowing between the separating discs 6, rotation is imparted to it by the rotation of the centrifuge rotor. The particles suspended in the gas are thus caused by the centrifugal force to move towards, and into contact with, the insides of the separating discs, i.e. the sides of the truncated conical separating discs which face towards the rotational axis R. Upon contact with the separating discs, the particles become entrained by them and are thereafter acted upon mainly by centrifugal forces which cause them to move radially outwards along the insides of the separating discs. When they reach the circumferential edges of the separating discs, the particles are propelled out from the centrifuge rotor 3 and are thus returned to the space 4, 4'.

The crankcase gas which has been relieved of particles in each intermediate space between neighbouring separating discs 6 continues to move radially inwards to the central outlet chamber 11 in the centrifuge rotor 3. However, the rotation of the centrifuge rotor results in flow resistance on the gas flowing through the intermediate spaces 7 between the separating discs 6. In other words, the centrifuge rotor 3 exerts a pumping action on the gas flow in a direction opposite to the desired direction of flow through the centrifuge rotor. If during operation the crankcase gas formed which is supplied to the space 4, 4' generates a high enough gas pressure therein, it will be caused, despite said flow resistance, to flow radially inwards towards the central outlet chamber 11 and out through the gas outlet 13'. However, the engine is so dimensioned that the pressure within the space 4, 4' needs to be kept within a specific pressure range, i.e. the pressure should not be allowed rise above a certain positive pressure, nor fall below a certain negative pressure. If the permissible positive pressure in the space 4, 4' is not sufficient to push the crankcase gas through the rotating centrifuge rotor, the device may be provided with said fan impeller 16 situated downstream of the centrifuge rotor to compensate for the pressure drop associated with the gas flow through the centrifuge rotor. The rotating fan impeller 16 thus draws crankcase gas through the centrifuge rotor 3 during operation. The cleaned crankcase gas leaves the outlet chamber 11 of the rotor 3 through the gas outlet 13, 13' and 13".

The invention is not confined to the embodiments referred to but may be varied and modified within the scope of the claims set out below. In the embodiments referred to, the centrifuge rotor is disposed horizontally in the space, but it may also be disposed vertically therein. Thus the centrifuge rotor may for example be arranged to hang in the valve cover via the rotor shaft and the bearing unit in the wall, or via the rotor shaft and the motor situated outside the space. The truncated conical separating discs may also be oriented with their inside facing either towards (as shown in the drawings) or away from the gas outlet. If they face away from the gas outlet, the first end wall 8 will instead be provided with a plurality of apertures running through it so that the central outlet chamber can communicate with the gas outlet in order to discharge cleaned gas from the centrifuge rotor.

## Claims

1. A combustion engine comprising a device for cleaning of polluted gas at the combustion engine, which device (1) comprises a centrifugal separator (2) for cleaning of the gas from therein suspended pollutants in the form of solid or liquid particles, which centrifugal separator (2) comprises
- a centrifuge rotor (3) which is rotatable about a rotational axis (R) by a drive device (19, 19') and is arranged to cause the gas to rotate, wherein the centrifuge rotor (3) comprises a stack of truncated conical separating discs (6) disposed at mutual spacing so that they delimit intermediate spaces (7) between them for the gas to flow through,
- an outlet chamber (11) which is disposed centrally within the stack of separating discs and communicates with said intermediate spaces (7), whereby the centrifuge rotor (3) is configured for counterflow separation in such a way that the polluted gas is caused to rotate and is led into the intermediate spaces (7) radially from outside the stack of separating discs (6) and into towards the central outlet chamber (11), and
- a gas outlet (13, 13', 13") which communicates with the outlet chamber (11) and is arranged to conduct the cleaned gas from the centrifuge rotor (3),
**characterised in that**
the stack of separating discs (6) on the centrifuge rotor (3) is disposed for rotation in a space (4, 4') formed within the engine and arranged to receive the polluted gas, the intermediate spaces (7) between the separating discs communicating directly with the space (4, 4'), and the gas outlet (13, 13', 13") is arranged to conduct the cleaned gas out from the space (4, 4') through a wall (5, 5') which delimits the space.

2. A combustion engine according to claim 1, **characterised in that** the drive device (19, 19') is so arranged that the speed of the centrifuge rotor is variable relative to the speed of the engine.

3. A combustion engine according to claim 1 or 2, **characterised in that** the drive device is a motor (19, 19').

4. A combustion engine according to any one of claims 1-3, **characterised in that** the drive device (19) is situated outside the space (4, 4').

5. A combustion engine according to any one of claims 1-4, **characterised in that** a bearing unit (20a, 20a', 20b, 21, 21a) is provided in the delimiting wall (5, 5') of the space to rotatably support the centrifuge rotor (3) in the wall (5,5').

6. A combustion engine according to claim 5, **characterised in that** a further bearing unit (20b', 21b) is provided in the space (4, 4'), and the bearing units (20a', 20b', 21a, 21b) are arranged to rotatably support the centrifuge rotor on the respective sides of the stack of separating discs (6).

7. A combustion engine according to claims 4 and 5, **characterised in that** the centrifuge rotor (3) is drivingly connected to the drive device (19) via a rotor shaft (10) which extends through a shaft lead-through in the delimiting wall (5, 5') of the space, the shaft lead-through being configured with said bearing unit (20a, 20a', 20b, 21, 21a) in the wall (5,5').

8. A combustion engine according to claim 5 or 7, **characterised in that** the centrifuge rotor (3) is rotatably supported in only said bearing unit (20a, 20a', 20b, 21, 21a) in the wall (5, 5').

9. A combustion engine according to any one of claims 5 - 8, **characterised in that** the gas outlet (13) communicates with the outlet chamber (11) via an axial end wall (9) situated on the stack of separating discs and disposed distally about said bearing unit (20a, 20b, 21) in the wall (5).

10. A combustion engine according to any one of claims 5 - 8, **characterised in that** the gas outlet (13', 13") communicates with the outlet chamber (11) via an axial end wall (9) situated on the stack of separating discs and disposed proximally about said bearing unit (20a', 21a) in the wall (5, 5').

11. A combustion engine according to claim 10, **characterised in that** the gas outlet (13', 13") has the form of a tubular element (15b) which surrounds said bearing unit (20a', 21a) in the wall (5, 5') and which is connected to the delimiting wall (5, 5') of the space, which gas outlet forms an outlet duct (18a) in which a bearing support (21a) of the bearing unit (20a', 21a) is arranged in such a way that cleaned gas can be conducted past the bearing support (21a) in the outlet duct (18a).

12. A, combustion engine according to claim 3, **characterised in that** the motor is an electric motor (19).

13. A combustion engine according to claim 3, **characterised in that** the motor is a hydraulic (19') or pneumatic motor arranged to rotate the centrifuge rotor (3) by means of a fluid which is pressurised by the combustion engine during operation.

14. A combustion engine according to claim 13, **characterised in that** the motor comprises a turbine (19') disposed in the space (4, 4') and connected to the centrifuge rotor (3), and comprises a duct for supply of said pressurised fluid to an orifice situated in the space (4, 4') and directed towards the turbine (19') in order to cause the turbine wheel and thereby the centrifuge rotor (3) to rotate.

15. A combustion engine according to claim 14, **characterised in that** said pressurised fluid is a lubricant for the combustion engine.

16. A combustion engine according to any one of the previous claims, **characterised in that** the centrifugal separator (2) comprises a fan (16, 17) situated downstream of the stack of separating discs (6) and adapted to compensating for the pressure drop associated with the gas flow through the centrifuge rotor (3).

17. A combustion engine according to claim 16, **characterised in that** the fan is arranged in the gas outlet (13, 13"), the gas outlet being provided with a fan housing (17) enclosing a fan impeller (16) disposed on a rotor shaft (10) which belongs to the centrifuge rotor (3) and which extends into the fan housing (17).

18. A combustion engine according to any one of the previous claims, **characterised in that** the space (4) formed within the combustion engine is delimited by a cover (5) of the engine, such as a valve cover, a timing chain case or a flywheel housing.

19. A combustion engine according to any one of the previous claims, **characterised in that** said polluted gas is crankcase gas vented from a crankcase (5') of the combustion engine.

20. A combustion engine according to claim 19, **characterised in that** the space (4') formed within the combustion engine is the crankcase (5') of the engine or a space formed within the engine block and arranged to communicate with the crankcase (5').

## Patentansprüche

1. Verbrennungskraftmaschine, die eine Vorrichtung für das Reinigen von verunreinigtem Gas in der Verbrennungskraftmaschine aufweist, wobei die Vorrichtung (1) einen Zentrifugalabscheider (2) für das Reinigen des Gases von darin schwebenden Verunreinigungssubstanzen in der Form von festen oder flüssigen Teilchen aufweist, wobei der Zentrifugalabscheider (2) aufweist:
- einen Zentrifugenrotor (3), der um eine Rotationsachse (R) mittels einer Antriebsvorrichtung (19, 19') drehbar und angeordnet ist, um zu veranlassen, dass sich das Gas dreht, wobei der Zentrifugenrotor (3) einen Stapel von kegelstumpfförmigen Trennscheiben (6) aufweist, die mit gegenseitigem Abstand so angeordnet sind, dass sie Zwischenräume (7) zwischen sich abgrenzen, damit das Gas hindurchströmen kann;
- eine Austrittskammer (11), die mittig innerhalb des Stapels der Trennscheiben angeordnet ist und mit den Zwischenräumen (7) in Verbindung steht, wobei der Zentrifugenrotor (3) für eine Gegenstromabscheidung in einer derartigen Weise ausgebildet ist, dass das verunreinigte Gas zur Drehung veranlasst und in die Zwischenräume (7) radial von außerhalb des Stapels der Trennscheiben (6) und in Richtung der mittigen Austrittskammer (11) geführt wird; und
- einen Gasaustritt (13, 13', 13"), der mit der Austrittskammer (11) in Verbindung steht und angeordnet ist, um das gereinigte Gas vom Zentrifugenrotor (3) zu leiten,
**dadurch gekennzeichnet, dass**
der Stapel der Trennscheiben (6) auf dem Zentrifugenrotor (3) für eine Drehung in einem Raum (4, 4') angeordnet ist, der innerhalb der Kraftmaschine ausgebildet und angeordnet ist, um das verunreinigte Gas aufzunehmen, wobei die Zwischenräume (7) zwischen den Trennscheiben direkt mit dem Raum (4, 4') in Verbindung sind und der Gasaustritt (13, 13', 13") angeordnet ist, um das gereinigte Gas aus dem Raum (4, 4') durch eine Wand (5, 5') zu leiten, die den Raum abgrenzt.

2. Verbrennungskraftmaschine nach Anspruch 1, **dadurch gekennzeichnet, dass** die Antriebsvorrichtung (19, 19') so angeordnet ist, dass die Drehzahl des Zentrifugenrotors relativ zur Drehzahl der Kraftmaschine veränderlich ist.

3. Verbrennungskraftmaschine nach Anspruch 1 oder 2, **dadurch gekennzeichnet, dass** die Antriebsvorrichtung ein Motor (19, 19') ist.

4. Verbrennungskraftmaschine nach einem der Ansprüche 1 bis 3, **dadurch gekennzeichnet, dass** sich die Antriebsvorrichtung (19) außerhalb des Raumes (4, 4') befindet.

5. Verbrennungskraftmaschine nach einem der Ansprüche 1 bis 4, **dadurch gekennzeichnet, dass** eine Lagereinheit (20a, 20a', 20b, 21, 21a) in der Abgrenzungswand (5, 5') des Raumes vorhanden ist, um den Zentrifugenrotor (3) in der Wand (5, 5') drehbar zu tragen.

6. Verbrennungskraftmaschine nach Anspruch 5, **dadurch gekennzeichnet, dass** eine weitere Lagereinheit (20b', 21b) im Raum (4, 4') vorhanden ist und die Lagereinheiten (20a', 20b', 21a, 21b) angeordnet sind, um den Zentrifugenrotor drehbar auf den jeweiligen Seiten des Stapels der Trennscheiben (6) zu tragen.

7. Verbrennungskraftmaschine nach Anspruch 4 und 5, **dadurch gekennzeichnet, dass** der Zentrifugenrotor (3) treibend mit der Antriebsvorrichtung (19) mittels einer Rotorwelle (10) verbunden ist, die sich durch eine Wellendurchführung in der Abgrenzungswand (5, 5') des Raumes erstreckt, wobei die Wellendurchführung mit der Lagereinheit (20a, 20a', 20b, 21, 21a) in der Wand (5, 5') ausgebildet ist.

8. Verbrennungskraftmaschine nach Anspruch 5 oder 7, **dadurch gekennzeichnet, dass** der Zentrifugenrotor (3) drehbar in nur der Lagereinheit (20a, 20a', 20b, 21, 21a) in der Wand (5, 5') getragen wird.

9. Verbrennungskraftmaschine nach einem der Ansprüche 5 bis 8, **dadurch gekennzeichnet, dass** der Gasaustritt (13) mit der Austrittskammer (11) mittels einer axialen Endwand (9) in Verbindung steht, die sich am Stapel der Trennscheiben befindet und distal um die Lagereinheit (20a, 20b, 21) in der Wand (5) angeordnet ist.

10. Verbrennungskraftmaschine nach einem der Ansprüche 5 bis 8, **dadurch gekennzeichnet, dass** der Gasaustritt (13', 13") mit der Austrittskammer (11) mittels einer axialen Endwand (9) in Verbindung steht, die sich auf dem Stapel der Trennscheiben befindet und proximal um die Lagereinheit (20a', 21a) in der Wand (5, 5') angeordnet ist.

11. Verbrennungskraftmaschine nach Anspruch 10, **dadurch gekennzeichnet, dass** der Gasaustritt (13', 13") die Form eines rohrförmigen Elementes (15b) aufweist, das die Lagereinheit (20a', 21a) in der Wand (5, 5') umgibt, und das mit der Abgrenzungswand (5, 5') des Raumes verbunden ist, wobei der Gasaustritt einen Austrittskanal (18a) bildet, in dem ein Traglager (21a) der Lagereinheit (20a', 21a) in einer derartigen Weise angeordnet ist, dass das gereinigte Gas am Traglager (21a) im Austrittskanal (18a) vorbei geleitet werden kann.

12. Verbrennungskraftmaschine nach Anspruch 3, **dadurch gekennzeichnet, dass** der Motor ein Elektromotor (19) ist.

13. Verbrennungskraftmaschine nach Anspruch 3, **dadurch gekennzeichnet, dass** der Motor ein hydraulischer (19') oder ein pneumatischer Motor ist, der angeordnet ist, um den Zentrifugenrotor (3) mittels eines Fluids zu drehen, das durch die Verbrennungskraftmaschine während des Betriebes unter Druck gesetzt wird.

14. Verbrennungskraftmaschine nach Anspruch 13, **dadurch gekennzeichnet, dass** der Motor eine Turbine (19') aufweist, die im Raum (4, 4') angeordnet und mit dem Zentrifugenrotor (3) verbunden ist, und einen Kanal für die Zuführung des unter Druck stehenden Fluids zu einer Öffnung aufweist, die sich im Raum (4, 4') befindet und zur Turbine (19') hin gerichtet ist, um die Drehung des Turbinenrades und dadurch des Zentrifugenrotors (3) zu veranlassen.

15. Verbrennungskraftmaschine nach Anspruch 14, **dadurch gekennzeichnet, dass** das unter Druck stehende Fluid ein Schmiermittel für die Verbrennungskraftmaschine ist.

16. Verbrennungskraftmaschine nach einem der vorhergehenden Ansprüche, **dadurch gekennzeichnet, dass** der Zentrifugalabscheider (2) ein Gebläse (16, 17) aufweist, das sich stromabwärts vom Stapel der Trennscheiben (6) befindet und ausgebildet ist, um den Druckabfall auszugleichen, der mit dem Gasstrom durch den Zentrifugenrotor (3) in Verbindung steht.

17. Verbrennungskraftmaschine nach Anspruch 16, **dadurch gekennzeichnet, dass** das Gebläse im Gasaustritt (13, 13") angeordnet ist, wobei der Gasaustritt bei einem Gebläsegehäuse (17) vorhanden ist, das ein Gebläserad (16) einschließt, das auf einer Rotorwelle (10) angeordnet ist, die zum Zentrifugenrotor (3) gehört, und die sich in das Gebläsegehäuse (17) erstreckt.

18. Verbrennungskraftmaschine nach einem der vorhergehenden Ansprüche, **dadurch gekennzeichnet, dass** der innerhalb der Verbrennungskraftmaschine gebildete Raum (4) durch eine Abdeckung (5) der Kraftmaschine abgegrenzt wird, wie beispielsweise einen Ventildeckel, ein Steuerkettengehäuse oder ein Schwungradgehäuse.

19. Verbrennungskraftmaschine nach einem der vorhergehenden Ansprüche, **dadurch gekennzeichnet, dass** das verunreinigte Gas ein Kurbelgehäusegas ist, das aus einem Kurbelgehäuse (5') der Verbrennungskraftmaschine abgelassen wird.

20. Verbrennungskraftmaschine nach Anspruch 19, **dadurch gekennzeichnet, dass** der innerhalb der Verbrennungskraftmaschine gebildete Raum (4') das Kurbelgehäuse (5') der Kraftmaschine oder ein Raum ist, der innerhalb des Motorblockes gebildet wird und angeordnet ist, um eine Verbindung mit dem Kurbelgehäuse (5') zu bewirken.

## Revendications

1. Moteur à combustion comprenant un dispositif de nettoyage d'un gaz pollué au niveau du moteur à combustion, lequel dispositif (1) comprend un séparateur centrifuge (2) destiné à nettoyer le gaz des polluants présents dans celui-ci sous forme de particules solides ou liquides en suspension, lequel séparateur centrifuge (2) comprend
- un rotor centrifuge (3) pouvant être mis en rotation autour d'un axe de rotation (R) par un dispositif d'entraînement (19,19') et conçu pour mettre le gaz en rotation, le rotor centrifuge (3) comprenant un empilement de disques de séparation tronconiques (6) disposés à une distance réciproque les uns des autres de façon à délimiter entre eux des espaces intermédiaires (7) permettant l'écoulement du gaz,
- une chambre de sortie (11) qui est située de manière centrale dans l'empilement de disques de séparation et communique avec lesdits espaces intermédiaires (7), le rotor centrifuge (3) étant configuré pour permettre une séparation à contre-courant de telle sorte que le gaz pollué soit mis en rotation et soit amené radialement de l'extérieur de l'empilement de disques de séparation (6) dans les espaces intermédiaires (7) et vers la chambre de sortie centrale (11) pour y entrer, et
- une sortie de gaz (13, 13', 13") qui communique avec la chambre de sortie (11) et est conçue pour conduire le gaz purifié à l'extérieur du rotor centrifuge (3),
**caractérisé par le fait que**
l'empilement de disques de séparation (6) du rotor centrifuge (3) est agencé pour pouvoir effectuer une rotation dans un espace (4, 4') formé à l'intérieur du moteur et conçu pour recevoir le gaz pollué, les espaces intermédiaires (7) entre les disques de séparation communiquant directement avec l'espace (4, 4'), et la sortie de gaz (13, 13', 13") est conçue pour conduire le gaz purifié à l'extérieur de l'espace (4, 4') à travers une paroi (5, 5') qui délimite l'espace.

2. Moteur à combustion selon la revendication 1, **caractérisé par le fait que** le dispositif d'entraînement (19, 19') est conçu de manière à ce que la vitesse du rotor centrifuge soit variable par rapport à la vitesse du moteur.

3. Moteur à combustion selon la revendication 1 ou 2, **caractérisé par le fait que** le dispositif d'entraînement est un moteur (19, 19').

4. Moteur à combustion selon l'une quelconque des revendications 1 à 3, **caractérisé par le fait que** le dispositif d'entraînement (19) est situé à l'extérieur de l'espace (4, 4').

5. Moteur à combustion selon l'une quelconque des revendications 1 à 4, **caractérisé par le fait qu'**une unité de palier (20a, 20a', 20b, 21, 21a) est prévue dans la paroi de délimitation (5, 5') de l'espace pour supporter en rotation le rotor centrifuge (3) dans la paroi (5, 5').

6. Moteur à combustion selon la revendication 5, **caractérisé par le fait qu'**une unité de palier supplémentaire (20b', 21b) est prévue dans l'espace (4, 4') et les unités de palier (20a', 20b', 21a, 21b) sont conçues pour supporter en rotation le rotor centrifuge sur les côtés respectifs de l'empilement de disques de séparation (6).

7. Moteur à combustion selon les revendications 4 et 5, **caractérisé par le fait que** le rotor centrifuge (3) est relié par transmission au dispositif d'entraînement (19) par le biais d'un arbre de rotor (10) qui s'étend à travers un passage d'arbre dans la paroi de délimitation (5, 5') de l'espace, le passage d'arbre étant configuré avec ladite unité de palier (20a, 20a', 20b, 21, 21a) dans la paroi (5, 5').

8. Moteur à combustion selon la revendication 5 ou 7, **caractérisé par le fait que** le rotor centrifuge (3) est supporté en rotation dans ladite unité de palier (20a, 20a', 20b, 21, 21a) seulement dans la paroi (5, 5').

9. Moteur à combustion selon l'une quelconque des revendications 5 à 8, **caractérisé par le fait que** la sortie de gaz (13) communique avec la chambre de sortie (11) par le biais d'une paroi d'extrémité axiale (9) située sur l'empilement de disques de séparation et disposée de manière distale autour de ladite unité de palier (20a, 20b, 21) dans la paroi (5).

10. Moteur à combustion selon l'une quelconque des revendications 5 à 8, **caractérisé par le fait que** la sortie de gaz (13', 13") communique avec la chambre de sortie (11) par le biais d'une paroi d'extrémité axiale (9) située sur l'empilement de disques de séparation et disposée de manière proximale autour de ladite unité de palier (20a', 21a) dans la paroi (5, 5').

11. Moteur à combustion selon la revendication 10, **caractérisé par le fait que** la sortie de gaz (13', 13") a la forme d'un élément tubulaire (15b) qui entoure ladite unité de palier (20a', 21a) dans la paroi (5, 5') et qui est relié à la paroi de délimitation (5, 5') de l'espace, laquelle sortie de gaz forme un conduit de sortie (18a) dans lequel un support de palier (21a) de l'unité de palier (20a', 21a) est disposé de telle sorte que le gaz purifié puisse être conduit de l'autre côté du support de palier (21a) dans le conduit de sortie (18a).

12. Moteur à combustion selon la revendication 3, **caractérisé par le fait que** le moteur est un moteur électrique (19).

13. Moteur à combustion selon la revendication 3, **caractérisé par le fait que** le moteur est un moteur hydraulique (19') ou pneumatique conçu pour mettre en rotation le rotor centrifuge (3) au moyen d'un fluide qui est mis sous pression par le moteur à combustion pendant le fonctionnement.

14. Moteur à combustion selon la revendication 13, **caractérisé par le fait que** le moteur comprend une turbine (19') disposée dans l'espace (4, 4') et reliée au rotor centrifuge (3) et comprend un conduit pour amener ledit fluide sous pression vers un orifice situé dans l'espace (4, 4') et dirigé vers la turbine (19') afin de mettre en rotation la roue de turbine et, de ce fait, le rotor centrifuge (3).

15. Moteur à combustion selon la revendication 14, **caractérisé par le fait que** ledit fluide sous pression est un lubrifiant pour le moteur à combustion.

16. Moteur à combustion selon l'une quelconque des revendications précédentes, **caractérisé par le fait que** le séparateur centrifuge (2) comprend un ventilateur (16, 17) situé en aval de l'empilement de disques de séparation (6) et adapté pour compenser la chute de pression associée à l'écoulement de gaz à travers le rotor centrifuge (3).

17. Moteur à combustion selon la revendication 16, **caractérisé par le fait que** le ventilateur est disposé dans la sortie de gaz (13, 13"), la sortie de gaz étant pourvue d'un carter de ventilateur (17) entourant une roue de ventilateur (16) disposée sur un arbre de rotor (10) qui appartient au rotor centrifuge (3) et qui s'étend dans le carter de ventilateur (17).

18. Moteur à combustion selon l'une quelconque des revendications précédentes, **caractérisé par le fait que** l'espace (4) formé à l'intérieur du moteur à combustion est délimité par un couvercle (5) du moteur, tel qu'un couvercle de soupape, un carter de chaîne de distribution ou un carter de volant.

19. Moteur à combustion selon l'une quelconque des revendications précédentes, **caractérisé par le fait que** ledit gaz pollué est le gaz de carter de vilebrequin évacué d'un carter de vilebrequin (5') du moteur à combustion.

20. Moteur à combustion selon la revendication 19, **caractérisé par le fait que** l'espace (4') formé à l'intérieur du moteur à combustion est le carter de vilebrequin (5') du moteur ou un espace formé à l'intérieur du bloc moteur et conçu pour communiquer avec le carter de vilebrequin (5').
